# FASCICULE DE BREVET EUROPEEN

(11) **EP 3 123 344 B1**
(45) Date de publication et mention de la délivrance du brevet: **13.12.2017**
(21) Numéro de dépôt: 15711708.6
(22) Date de dépôt: 17.03.2015
(51) Int. Cl.: G06F 13/28

(54) **PROCEDE DE TRANSFERT DE DONNEES ENTRE TACHES TEMPS REEL UTILISANT UN CONTROLEUR MEMOIRE DMA**
VERFAHREN ZUR DATENÜBERTRAGUNG ZWISCHEN ECHTZEITAUFGABEN UNTER VERWENDUNG EINES DMA-SPEICHER-STEUERGERÄTS
METHOD FOR DATA TRANSFER BETWEEN REAL-TIME TASKS USING A DMA MEMORY CONTROLLER

(30) Priorité: 25.03.2014 FR 1452497
(43) Date de publication de la demande: 01.02.2017
(73) Titulaire: Commissariat à l'Énergie Atomique et aux Énergies Alternatives, 75015 Paris (FR)
(72) Inventeur: JAN, Mathieu, F-91600 Savigny-sur-Orge (FR); DEBICKI, Olivier, F-38660 Saint-Vincent de Mercuze (FR)
(74) Mandataire: Hnich-Gasri, Naïma
(86) Numéro de dépôt international: PCT/EP2015/055512
(87) Numéro de publication internationale: WO 2015/144488

(56) Documents cités:
- WO-A1-2007/003986
- US-A1- 2008 126 601

## Description

### Domaine technique

La présente invention concerne de manière générale les systèmes temps réel et en particulier un procédé de transfert de données entre tâches temps réel utilisant un contrôleur d'accès direct à la mémoire.

### Art Antérieur

Les systèmes temps réels, comme par exemple les systèmes embarqués ou répartis, supportent des applications qui dépendent du respect des contraintes temporelles de l'environnement. En particulier, dans les systèmes temps réels dits « stricts » où la satisfaction de ces contraintes temporelles est critique, les traitements sont regroupés dans des unités d'exécution différentes qui communiquent entre eux. La mise en oeuvre de ces communications entre unités d'exécution (ou tâches) est à la charge du système d'exploitation temps réel sous-jacent (désigné par l'acronyme RTOS pour l'expression anglo-saxonne « Real-time Operating System »), qui est utilisé pour l'exécution d'applicatifs multi-tâches. Deux approches existent pour implémenter une telle mise en oeuvre des communications inter-tâches :
- Dans une première approche, le RTOS met en oeuvre explicitement les copies de données nécessaires à travers l'utilisation de fonctions de copie mémoire (par exemple « memcpy ») ;
- Dans une deuxième approche, le RTOS délègue à un contrôleur d'accès direct à la mémoire (ou DMA, acronyme pour « Direct Memory Access ») la mise en oeuvre des transferts de données nécessaires et n'est informé que de la terminaison des transferts.

La seconde approche permet de décharger le processeur de l'exécution des transferts de données et de dégager du temps processeur supplémentaire pour exécuter des traitements applicatifs. Toutefois, la délégation des copies de données au contrôleur DMA a un coût initial fixe et indépendant de la taille des données à copier et de l'enchaînement des requêtes DMA nécessaires qui est fonction de l'organisation mémoire de l'applicatif exécuté. Ainsi, si l'utilisation d'un contrôleur DMA pour transférer des données s'avère performante à partir de tailles de données faibles ou moyennes, ce n'est pas le cas pour des tailles de données très faibles. Par ailleurs, l'utilisation d'une telle solution nécessite la mise en place d'un « contrat » entre le contrôleur DMA responsable de la copie des données et le concepteur d'un applicatif pour assurer que les zones mémoires source et destination des mouvements mémoires ne peuvent plus être modifiées par un traitement applicatif pendant la mise en oeuvre du transfert par le contrôleur DMA.

On connaît diverses solutions pour maîtriser les interférences dues à l'utilisation dans un système temps réel strict d'un DMA par une tâche pour communiquer avec un périphérique. Ainsi, certaines solutions s'intéressent à l'impact de l'utilisation d'une tâche opérant une entrée/sortie (I/O) via un DMA sur les temps d'exécution « pires cas » des tâches s'exécutant sur une ressource processeur (par exemple dans Tai-Yi Huang and Chih-Chieh Chou and Po-Yuan Chen. *Bounding the Execution Times of DMA I*/*O Tasks on Hard-Real-Time Embedded Systems.* 9th International Conférence on Real-Time and Embedded Computing Systems and Applications, RTCSA 2003, Taiwan, February 2003). Dans un système temps réel strict, ces temps d'exécution « pires cas » doivent être en effet connus. Or, un DMA peut se programmer en mode vol de cycle CPU (acronyme pour « Central Processing Unit », signifiant littéralement « Unité centrale de traitement») pour l'utilisation du bus mémoire, ce qui peut engendrer des conflits d'accès à la mémoire par le processeur et donc retarder l'exécution de traitements applicatifs. D'autres solutions portent sur l'utilisation d'un contrôleur DMA dans les tests d'ordonnancement de tâches temps réel strictes, soit de manière explicite à travers l'inclusion d'une tâche supplémentaire soit par augmentation des temps d'exécution pire cas de chaque tâche (C. Pitter and M. Schoeberl. Time Predictable CPU and DMA Shared Memory Access. International Conférence on Field Programmable Logic and Applications, pp.317-322, August 2007). Toutefois, ces solutions ne portent pas sur l'utilisation d'un contrôleur DMA pour opérer entre des tâches temps réel communicantes des transferts de données ayant des contraintes temporelles.

D'autres solutions portant sur l'optimisation de l'ordre des requêtes DMA par rapport à leur échéance de terminaison sont connues. Par exemple, US 7 917 667 B2 décrit une méthode de calcul de la priorité des différentes requêtes DMA et donc de leur ordre d'exécution par le contrôleur DMA. Le calcul de la priorité d'une requête DMA est effectué matériellement et/ou logiciellement en s'appuyant en particulier sur le temps initialement estimé, le temps pris et une marge arbitraire. Ce brevet porte notamment sur les requêtes DMA dans lesquelles une échéance de terminaison est spécifiée. Un tel procédé permet de modifier la priorité d'une requête DMA en fonction de son urgence (i.e. son avancement réel par rapport à son échéance) par rapport à d'autres requêtes DMA en cours. Toutefois, ce document n'aborde pas les transferts de données entre tâches temps réel communicantes mise en oeuvre par des requêtes DMA.

Une autre solution proposée dans US 3 925 766 A porte sur un contrôleur DMA comprenant un mécanisme de surveillance périodique de l'utilisation d'un bus partagé entre des ressources de calcul et des périphériques. Cette surveillance de l'utilisation d'un bus partagé permet d'autoriser ou de rejeter l'accès au bus pour des requêtes DMA depuis ou vers des périphériques de manière à partager le bus de manière proportionnelle par rapport à la priorité des différentes requêtes DMA. Les situations de famines pouvant exister dans un contrôleur DMA classique où la priorité des transferts est fixée statiquement et utilisée pour définir l'ordre d'exécution des transferts sont ainsi évitées. Ce mécanisme de surveillance de l'utilisation d'un bus est également utilisé pour détecter si le transfert fait parti d'un traitement en temps réel ou non et adapter en conséquence la granularité des données copiées par une requête DMA.

D'autres solutions relatives à l'optimisation des transferts de données par DMA portent sur des extensions matérielles au niveau DMA pour lier le déclenchement de requêtes DMA à un événement ou à des dates. Par exemple, WO 2007003986 propose un procédé pour programmer des tâches DMA temporellement cycliques afin de réaliser des transferts de données (procédé de transfert par DMA en cycle constant). Une tâche DMA temporellement cyclique est une tâche DMA ayant une périodicité définie et chaque instance de cette tâche périodique est constituée d'un ensemble de requêtes DMA, le nombre de requêtes DMA étant dépendant de la taille totale de la donnée à transférer et de la quantité de données transférable dans une requête DMA. L'utilisation de tels types de tâches DMA pour transférer des données ne nécessite pas d'interaction pour programmer le contrôleur DMA à chaque cycle. La priorité d'une requête DMA peut être dynamiquement adaptée en fonction des échéances associées aux transferts, si une politique d'arbitrage prenant en compte les échéances des transferts est utilisée. Ce document décrit notamment l'utilisation de trois dates comprenant la valeur du temps courant, la date de départ pour l'initialisation du transfert et une échéance. La violation de l'échéance peut être utilisée par le contrôleur DMA ou une ressource de calcul pour implémenter différentes stratégies, comme par exemple pour augmenter la priorité d'une requête DMA, stopper une tâche DMA, forcer l'exécution des requêtes DMA, etc. Comme le brevet US 7917667 B2, ce procédé permet à priori de construire un système dans lequel il peut être démontré que des requêtes DMA seront terminées avant une certaine échéance. Toutefois, cette solution ne résout pas le problème du transfert de données entre tâches temps réel communicantes mise en oeuvre par des requêtes DMA. Une autre solution proposée dans le brevet US 8 266 340 B2 décrit une extension matérielle au niveau du contrôleur DMA pour inclure un compteur matériel de mesure de temps, un comparateur de valeur du compteur de temps et un comparateur d'état par rapport à l'acquisition de l'état d'un périphérique utilisant le DMA. Sur la base de ces informations, après avoir obtenu une correspondance entre le compteur de temps et la valeur renseignée dans le comparateur de valeur du compteur de temps, le déclenchement d'une ou plusieurs requêtes DMA par le contrôleur DMA est conditionné par l'obtention d'une correspondance entre l'état du périphérique et la valeur renseignée dans le comparateur d'état. Un tel procédé permet de déclencher des requêtes DMA sans nécessiter d'opérations logicielles de type sondage (« polling » en langue anglo-saxonne), et donc l'intervention d'une ressource de calcul, évitant ainsi une charge supplémentaire au niveau de cette ressource de calcul.

D'autres solutions relatives à l'optimisation des transferts de données par DMA portent sur des extensions matérielles pour sécuriser l'exécution des requêtes DMA. Par exemple, le brevet US 7 523 229 B2 décrit une solution dans laquelle une extension matérielle pour le contrôle d'accès est associée à un contrôleur d'entrée/sortie, pourvu d'un contrôleur DMA, et est programmable via deux types de registres. Le premier type de registre est accessible par tout processus applicatif pour spécifier l'adresse de destination ou source dans une requête DMA entre le périphérique d'entrée/sortie et la mémoire du système (transfert de type mémoire-périphérique). Le second type de registre décrit les droits mémoires applicables sur la zone mémoire spécifiée dans le premier type de registre. Ce second type de registre est utilisable uniquement en mode d'exécution, dit « privilégié », par une ressource de calcul, c'est-à-dire par un code de confiance. Le contrôleur d'entrée/sortie ainsi étendu peut alors détecter toute tentative d'accès mémoire non autorisée lors d'une requête DMA et arrêter son exécution. Dans une autre approche encore, décrite dans le brevet US2005/0165783 A1, une extension matérielle est proposée dans laquelle la logique de contrôle des accès à la mémoire par les différents maîtres d'un bus (incluant donc potentiellement des contrôleurs DMA) est située au niveau de l'accès du bus (et non au niveau du contrôleur d'entrée/sortie comme dans le brevet US 7 523 229 B2). La table de description des droits d'accès mémoire est à la charge d'un processus privilégié, typiquement le système d'exploitation, et est renseignée lors du démarrage du système. De manière similaire, la demande de brevet WO 2009138928 A1 décrit une autre organisation de l'extension matérielle nécessaire via l'utilisation du mécanisme classique de protection mémoire dans une architecture non pas uniquement pour les ressources de calcul mais pour tous les maîtres connectés au système mémoire. Ainsi tout accès mémoire, qu'il provienne d'une ressource de calcul ou d'un contrôleur DMA est contrôlé avant d'être soit autorisé soit refusé.

Ainsi, il existe un certain nombre de solutions permettant de prendre en compte l'utilisation d'un DMA dans le dimensionnement et l'ordonnancement de systèmes temps réel, et/ou d'assurer que les transferts de données par un contrôleur DMA n'altèrent pas les contraintes temps réel des données, et/ou de sécuriser les transferts de donnée par DMA. Dans le cas ou l'approche utilisée pour mettre en oeuvre des communications inter-tâches s'appuie sur contrôleur DMA, il existe une latitude importante pour transférer les données entre l'activation et l'échéance de tâches communicantes, ce qui peut aboutir à des performances limitées du système temps réel, à un surdimensionnement des ressources nécessaires, ou à une compromission du système si les requêtes DMA ne sont pas exécutées de manière appropriée et sécurisée.

### Définition générale de l'invention

L'invention vient améliorer la situation en proposant un procédé pour transférer au moins une donnée entre une tâche temps réel productrice d'une donnée et une tâche temps réel consommatrice de la donnée, chaque donnée étant associée à une date de visibilité. Le procédé est mis en oeuvre dans un calculateur comprenant une mémoire centrale, au moins un processeur et au moins d'un contrôleur d'accès direct à la mémoire DMA, chaque contrôleur DMA étant configuré pour prendre en charge les transferts de données entre différentes zones de la mémoire centrale sous le contrôle d'un système d'exploitation exécuté sur lesdits processeurs. Le procédé comprend les étapes suivantes, en réponse à l'initiation du transfert d'une donnée par l'instance courante k d'une tâche initiatrice:
- la création par le système d'exploitation d'au moins un descripteur DMA pour décrire le transfert par DMA attendu pour la donnée, après l'exécution d'une instance donnée (k-1 ou k) de la tâche ;
- l'insertion par le système d'exploitation des descripteurs DMA dans une liste de descripteurs en attente de traitement par le contrôleur DMA, les descripteurs DMA étant insérés de manière triée en fonction d'un critère de tri relatif à la date de visibilité des données et/ou du comportement temporel des tâches;
- Le traitement des descripteurs de la liste de descripteurs DMA par exécution de requêtes DMA par le contrôleur DMA ; et
- l'exécution de l'instance suivante (k ou k+1) de la tâche initiatrice par le système d'exploitation en fonction de la terminaison du traitement d'un ensemble prédéfini des descripteurs DMA de la liste de descripteurs.

Dans certaines formes de réalisation, le procédé peut comprendre une étape de vérification par le système d'exploitation de la terminaison du traitement de l'ensemble prédéfini des descripteurs DMA de la liste.

Dans une première forme de réalisation, la tâche initiatrice peut être une tâche productrice de données, l'étape de création des descripteurs DMA étant déclenchée en réponse à la terminaison de l'exécution de l'instance courante k de la tâche initiatrice.

Le critère de tri peut alors être la date de visibilité associée à la donnée à transférer.

Dans cette première forme de réalisation, l'ensemble de descripteurs peut comprendre les descripteurs DMA qui ont une date de visibilité inférieure ou égale à la date d'activation de la prochaine l'instance de la tâche initiatrice, et en ce que l'étape de vérification est mise en oeuvre en déterminant si les descripteurs dudit ensemble sont associés à des informations de fin de traitement.

Dans une deuxième forme de réalisation, la tâche initiatrice est une tâche consommatrice de données, l'étape de création des descripteurs DMA étant alors déclenchée en réponse à la terminaison de l'exécution de l'instance précédente (k-1) de la tâche initiatrice.

Le critère de tri peut être alors la date d'échéance de l'instance courante k de la tâche initiatrice.

Dans la deuxième forme de réalisation, l'ensemble de descripteurs comprend l'ensemble des descripteurs DMA créés à l'étape de création, tandis que l'étape de vérification est mise en oeuvre en déterminant si les descripteurs de l'ensemble sont associés à des informations de fin de traitement.

L'étape d'insertion peut comprendre en outre la suspension temporaire des requêtes DMA en cours d'exécution par le contrôleur DMA, le temps de suspension étant utilisé par le système d'exploitation pour mettre à jour la liste des descripteurs DMA.

Le procédé peut comprendre en outre une étape de terminaison dans laquelle les bits de statut des descripteurs DMA traités à l'étape d'exécution par le contrôleur DMA sont positionnés pour indiquer la fin de traitement des descripteurs DMA.

Le procédé peut également comprendre une étape de notification dans laquelle le contrôleur DMA notifie au système d'exploitation la fin des transferts de données au sein de la mémoire centrale, le système d'exploitation étant apte à stocker les informations de fin de transferts dans une structure de données sous la forme d'une liste des transferts de données terminés.

Selon une autre caractéristique de l'invention, l'étape de vérification sur une donnée peut être retardée jusqu'au premier instant d'utilisation par la tâche de la zone mémoire stockant la donnée.

Dans un mode de réalisation, le calculateur peut comprendre au moins un mécanisme matériel de protection mémoire associé au contrôleur DMA pour sécuriser les transferts de données par programmation via des registres matériels accessibles par le processeur, le procédé comprenant :
- à l'étape d'insertion des descripteurs DMA, la programmation des registres matériels avec les droits mémoire nécessaires pour réaliser le transfert de la donnée ; ou
- lors de la détection d'un accès invalide par le mécanisme matériel de protection mémoire, la vérification que l'accès mémoire correspondant appartient à un des descripteurs DMA créés à l'étape de création pour le transfert de la donnée et la programmation des registres du matériel de protection mémoire avec les droits mémoire nécessaires pour réaliser le transfert de la donnée.

Dans un autre mode de réalisation, le calculateur peut comprendre au moins un mécanisme matériel de protection mémoire associé au contrôleur DMA pour sécuriser les transferts d'une donnée et utilisant des descripteurs mémoires qui lui sont fournis au moyen d'extensions dans le format d'un descripteur DMA pour inclure la description des droits mémoire autorisés pour les requêtes DMA associées au descripteur DMA, lesdits droits mémoires étant utilisés à l'étape d'exécution par le contrôleur DMA pour programmer le mécanisme matériel de protection mémoire avec les droits mémoires nécessaires de manière à réaliser le transfert de la donnée.

L'invention propose également un calculateur comprenant une mémoire centrale, au moins un processeur et au moins d'un contrôleur d'accès direct à la mémoire DMA, chaque contrôleur DMA étant configuré pour prendre en charge les transferts de données entre différentes zones de la mémoire centrale sous le contrôle d'un système d'exploitation exécuté sur lesdits processeurs, le calculateur étant configuré pour transférer au moins une donnée entre une tâche temps réel productrice d'une donnée et une tâche temps réel consommatrice de la donnée, chaque donnée étant associée à une date de visibilité. En réponse à l'initiation du transfert d'une donnée par l'instance courante k d'une tâche initiatrice :
- le système d'exploitation est apte à créer au moins un descripteur DMA pour décrire le transfert par DMA attendu pour la donnée, après l'exécution d'une instance donnée de la tâche (k-1, k) et pour insérer des descripteurs DMA dans une liste de descripteurs en attente de traitement par le contrôleur DMA, les descripteurs DMA étant insérés de manière triée en fonction d'un critère de tri relatif à la date de visibilité des données et/ou au comportement temporel des tâches;
- Le contrôleur DMA est configuré pour traiter les descripteurs de la liste de descripteurs DMA par exécution de requêtes DMA ;
le système d'exploitation étant en outre configuré pour exécuter de l'instance suivante (k, k+1) de la tâche initiatrice en fonction de la terminaison du traitement d'un ensemble prédéfini des descripteurs DMA de la liste de descripteurs.

Les modes de réalisation proposés permettent ainsi d'ordonnancer et d'optimiser le transfert de données, entre des tâches temps réel communicantes, en s'appuyant sur un contrôleur DMA, à partir d'un modèle de comportement temporel des tâches, tout en garantissant le respect des échéances associées au système. En complément, les modes de réalisation proposés peuvent sécuriser les transferts de données. Les différents processeurs sont ainsi déchargés de la gestion explicite des transferts mémoires, ce qui permet de dégager du temps processeur supplémentaire pour l'exécution de traitements applicatifs. Il en résulte une optimisation de l'utilisation des ressources d'exécution pour la conception de systèmes temps réel et notamment de systèmes temps réel « stricts ».

### Brève description des dessins

D'autres caractéristiques et avantages de l'invention apparaîtront à l'aide de la description qui suit et des figures des dessins annexés dans lesquels :
- La figure 1 est un schéma représentant l'architecture d'un calculateur, selon certains modes de réalisation ;
- La figure 2 est un schéma représentant les interactions entre tâches temps réels communicantes ;
- La figure 3 est un organigramme du procédé de transfert de données, selon certains modes de réalisation de l'invention ;
- La figure 4 illustre le procédé de transfert pour une tâche temps réel productrice d'une donnée, selon un exemple de réalisation de l'invention ; et
- La figure 5 illustre le procédé de transfert pour une tâche temps réel consommatrice d'une donnée, selon un autre exemple de réalisation de l'invention.

### Description détaillée

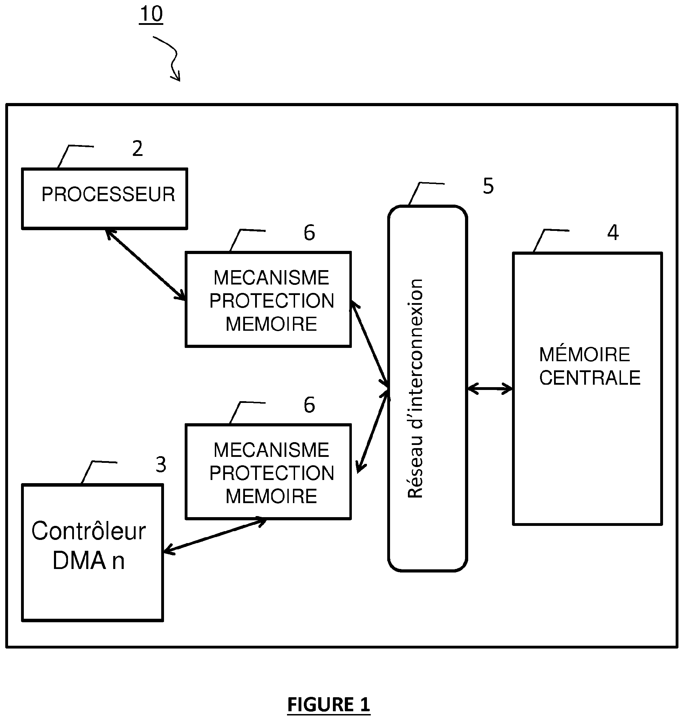

La Figure 1 représente de manière schématique les éléments de l'architecture d'un calculateur 10 selon certains modes de réalisation. Le calculateur 10 comprend un ou plusieurs processeurs 2, un ou plusieurs contrôleurs DMA 3 et une mémoire centrale 4. Les processeurs 2 et les contrôleurs DMA 3 sont reliés par un réseau d'interconnexion 5 pour pouvoir communiquer entre eux.

Les processeurs 2 et les contrôleurs DMA 3 constituent des contrôleurs qui peuvent jouer le rôle de maîtres sur le réseau d'interconnexion 5 de l'architecture, c'est-à-dire initier des requêtes sur ce réseau. A l'inverse, la mémoire centrale 4 et les périphériques d'entrée/sorties (non représentés) sont considérés comme des esclaves du réseau d'interconnexion 5 ne pouvant être à l'origine de requêtes sur ce réseau.

La suite de la description sera faite en référence à un calculateur comprenant un seul processeur 2 exécutant un système multi-tâches et un contrôleur DMA (Direct Memory Access), à titre d'exemple non limitatif et pour faciliter la compréhension de l'invention. Il convient de noter que la figure 1 est une représentation simplifiée du calculateur 10 sur laquelle n'apparaissent que les éléments 2, 3, 4 et 5 pour faciliter la compréhension de l'invention. Toutefois, l'homme du métier comprendra aisément que le calculateur 10 peut comprendre d'autres éléments classiques tels que des périphériques d'entrées/sorties, une hiérarchie mémoire (cache) et que l'invention n'est pas limitée à un calculateur comprenant un seul processeur 2 et un seul contrôleur DMA 3.

Chaque contrôleur DMA 3 est configuré pour prendre en charge les transferts de données entre différentes zones de la mémoire centrale 4 (ces transferts de données sont encore appelés transferts mémoire à mémoire), sous le contrôle d'un système d'exploitation exécuté sur les processeurs 2. Pour chaque donnée, le système d'exploitation a notamment pour fonction de préparer une ou plusieurs demandes de transferts en renseignant un ou plusieurs descripteurs DMA. Chaque descripteur DMA est ensuite inséré dans la liste des descripteurs DMA du contrôleur DMA 3 pour être traité par le contrôleur DMA 3. Le contrôleur DMA traite alors les descripteurs DMA en exécutant pour chaque descripteur DMA une ou plusieurs requêtes DMA, le nombre de requêtes DMA dépendant des fonctionnalités du contrôleur 3.

L'architecture du calculateur 10 peut comprendre notamment un ou plusieurs mécanismes de protection matérielle 6, de type MMU (acronyme pour « Memory Management Unit » signifiant littéralement Unité de gestion de la mémoire) ou MPU (acronyme pour « Memory Protection Unit » signifiant littéralement Unité de Protection de la Mémoire), afin de protéger l'accès au réseau d'interconnexion 5 que peuvent réaliser un ou plusieurs maîtres d'une telle architecture. De tels mécanismes permettent par exemple de se prémunir d'un comportement erroné ou malicieux d'un maître vis-à-vis d'un accès à la mémoire centrale 4. L'utilisation appropriée de tels mécanismes de protection mémoire peut notamment garantir l'isolation entre les différents traitements que peuvent exécuter des maîtres sur un réseau d'interconnexion 5.

Dans certaines formes de réalisation, le procédé de transfert de données peut s'appuyer sur la programmation appropriée d'un tel mécanisme matériel de protection mémoire 6 associé à un contrôleur DMA 3 pour isoler les transferts mémoire à mémoire nécessaires pour transférer des données entre tâches temps réel communicantes.

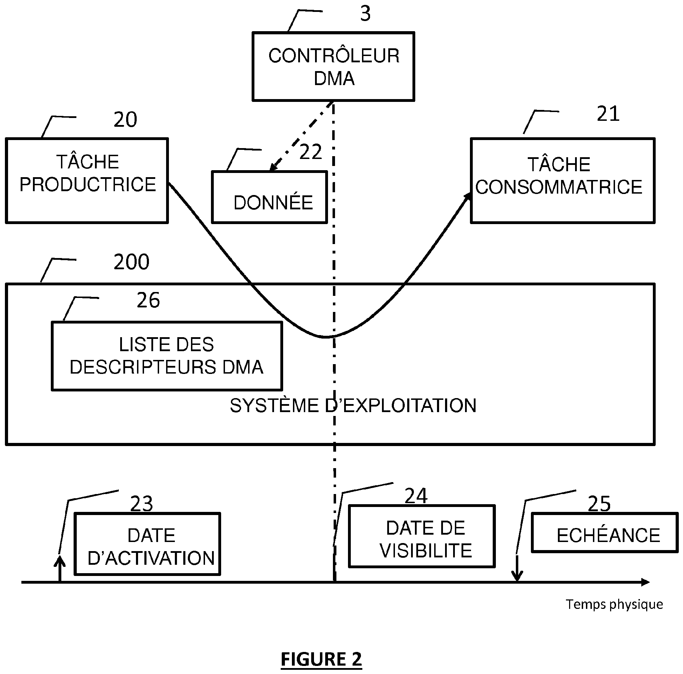

La figure 2 illustre le transfert de données dans un système multi-tâches composé de tâches temps réel communicantes. Une tâche temps réel communicante désigne une tâche qui a des contraintes temporelles, c'est-à-dire des dates d'activation et des échéances, et qui échange une ou plusieurs données avec une ou plusieurs autres tâches temps réel communicantes. Le transfert d'une donnée entre des tâches temps réel communicantes peut être initié soit par la tâche productrice de la donnée 20, soit par une tâche consommatrice de cette même donnée 21. Il peut exister plusieurs tâches consommatrices 21. Toutefois, il est avantageux de disposer d'une unique tâche productrice 20 pour une donnée afin d'éviter des problèmes de cohérence de données. A chaque instance d'une tâche temps réel est associée une date d'activation 23 et une échéance 25. La date d'activation 23 correspond à la date à partir de laquelle l'instance de la tâche est éligible à l'accès à un processeur 2 pour être exécutée par le système d'exploitation. L'échéance 25 correspond à la date avant laquelle l'instance de la tâche doit être terminée. Le comportement temporel d'une tâche temps réel donnée désigne ainsi l'ensemble des dates d'activation et échéances de toutes ses instances. Par ailleurs, à chaque donnée 22 peut être associée une date de visibilité 24 correspondant à la date à partir de laquelle cette donnée est rendue visible aux tâches consommatrices 21 pour être utilisée dans des traitements applicatifs. La date de visibilité 24 d'une donnée est généralement supérieure ou égale à l'échéance 25 de la tâche productrice de cette donnée.

Lorsqu'une instance d'une tâche productrice d'une donnée 20 termine son exécution, les données ne peuvent plus être modifiées par la tâche productrice 20 et un ou plusieurs descripteurs DMA 26 sont créés par le système d'exploitation 200 afin de décrire les transferts de données que devra réaliser le contrôleur DMA 3. La manière dont est stockée la liste des descripteurs DMA 26 peut dépendre de l'implémentation sous-jacente (matériel et RTOS).

Le procédé de transfert de données peut être initié par une tâche productrice de données 20 ou en variante par une tâche consommatrice de données 21 (la tâche productrice 20 ou consommatrice 21 qui initie le transfert pourra être communément désignée ci-après par l'expression « tâche initiatrice »).

Selon une caractéristique de l'invention, lorsque le transfert est initié par une tâche productrice 20, les descripteurs DMA 26 sont insérés de manière triée en fonction de l'échéance 25 associée à l'instance de la tâche productrice 20 par le système d'exploitation 200 dans une liste des descripteurs DMA afin d'être traités par le contrôleur DMA. Le contrôleur DMA génère alors les requêtes DMA à exécuter à partir de la liste de descripteurs pour transférer les données.

Avant l'exécution de la prochaine instance de la tâche productrice 20, le système d'exploitation 200 vérifie si le contrôleur DMA 3 a traité les différentes requêtes DMA des descripteurs DMA créés par la tâche productrice 20 dont la date de visibilité 24 est inférieure à la date d'activation 23 de l'instance courante de la tâche productrice 20 (l'activation correspond à l'instant à partir duquel l'instance de la tâche peut potentiellement s'exécuter). Si les différentes requêtes DMA ne sont pas toutes terminées, une erreur peut être alors notifiée au système. Par ailleurs, selon le comportement temporel des tâches, plusieurs instances de la tâche productrice peuvent être activées/exécutées avant d'atteindre la date de visibilité d'une donnée : l'identification de l'état des requêtes DMA associées à cette donnée (en cours d'exécution ou en attente d'exécution) permet alors d'optimiser le transfert de la donnée en évitant potentiellement l'exécution de requêtes DMA inutiles. Il convient de noter que si le contrôleur DMA 3 est configuré pour vérifier que l'exécution d'une requête DMA est terminée avant une certaine date, cette fonctionnalité peut être utilisée de manière optionnelle avec comme échéance pour les requêtes DMA les dates de visibilité des données associées. L'étape de vérification de la terminaison de requêtes DMA peut alors :
- soit consister à vérifier qu'aucune violation d'échéance n'a été détectée lors de l'exécution des requêtes DMA, si le contrôleur DMA est configuré pour renseigner uniquement l'état des requêtes DMA en positionnant des bits de statuts prévus à cet effet, ou
- ne pas être mise en oeuvre, si le contrôleur DMA est configuré pour notifier une erreur via une interruption au processeur lorsqu'une violation d'échéance est détectée lors de l'exécution une requête DMA.

Une tâche consommatrice 21 d'une donnée peut également être initiatrice de transferts de données par DMA. Dans ce cas, les descripteurs DMA 26 sont créés à la fin de l'exécution de l'instance précédente k-1 de la tâche consommatrice par le système d'exploitation 200. Les descripteurs DMA créés sont insérés de manière triée en fonction de l'échéance 25 associée à l'instance courante k de la tâche consommatrice 21 initiatrice des transferts, par le système d'exploitation 200 à la date d'activation 23 de la tâche consommatrice (ou « release date » en langue anglo-saxonne) pour être traités par le contrôleur DMA 3 et donc générer les requêtes DMA nécessaires pour transférer les données. Cette échéance 25 de la tâche ne correspond pas à la date de visibilité de la donnée mais permet de spécifier un ordre entre les différentes requêtes DMA issues du traitement des descripteurs DMA 26 par le contrôleur DMA 3 dans un système multi-tâches. Avant l'exécution réelle de l'instance courante k de la tâche consommatrice 21, le système d'exploitation 200 vérifie la terminaison de l'ensemble des requêtes DMA initiées. Ceci permet de garantir notamment que les transferts par DMA sont achevés avant toute utilisation des données par un applicatif.

Dans certains modes de réalisation, quelle que soit la nature de la tâche initiatrice des transferts par DMA (productrice ou consommatrice), la vérification de la terminaison des requêtes DMA peut être retardée jusqu'au moment de la modification de la donnée par l'instance courante de la tâche initiatrice, par exemple en utilisant une interface de programmation adaptée. Ceci permet d'étendre la longueur de l'intervalle de temps pendant lequel l'exécution de requêtes DMA est possible pour transférer une donnée par DMA.

Par ailleurs, dans des modes de réalisations particuliers, l'information selon laquelle des requêtes DMA demandées par l'instance de la tâche initiatrice ne sont pas terminées peut être utilisée par l'ordonnanceur d'un système d'exploitation 200 comme information supplémentaire pour retarder l'exécution de l'instance de cette tâche (à priorité initialement égal entre deux tâches), indépendamment de la nature de la tâche initiatrice des transferts par DMA (productrice ou consommatrice).

Dans une variante de réalisation du procédé de transfert et lorsque la tâche initiatrice est une tâche consommatrice, l'étape d'insertion d'un descripteur DMA peut être anticipée à la date de visibilité 24 de la donnée, ce qui permet également d'étendre la longueur de l'intervalle de temps pendant lequel l'exécution des requêtes DMA est possible si la date d'activation 23 de la tâche consommatrice est strictement postérieure à la date de visibilité 24 de la donnée.

Il convient de noter que les différents modes de réalisation du procédé d'exécution mis en oeuvre par la tâche productrice et par la tâche consommatrice peuvent être combinés afin d'obtenir un système multi-tâches s'appuyant sur un contrôleur DMA 3 pour le transfert de données entre tâches temps réel. Avantageusement, si le transfert de données est réalisé en plusieurs étapes nécessitant un transfert initié par une tâche productrice puis un transfert initié par une tâche consommatrice, l'étape d'insertion d'un descripteur DMA par une tâche consommatrice peut-être anticipé au moment de la terminaison du transfert par DMA initié par la tâche productrice afin d'étendre la longueur de l'intervalle de temps pendant lequel l'exécution de requêtes DMA initiées par la tâche consommatrice est possible.

Il convient également de noter que les différents modes de réalisation du procédé d'exécution peuvent s'appliquer alternativement à un sous-ensemble des différentes données que peuvent s'échanger les différentes tâches d'un applicatif. Un tel sous-ensemble peut être sélectionné en fonction de différents critères de sélection, comme par exemple en fonction de la taille des données.

De manière optionnelle et indépendamment de la nature de la tâche initiatrice des transferts par DMA (productrice ou consommatrice), la connaissance statique des différents échanges de données inter-tâches permet de programmer un dispositif matériel de protection mémoire associé au contrôleur DMA 3. Selon les capacités d'un tel dispositif matériel de protection mémoire 6 associé au contrôleur DMA 3, la sécurisation des transferts de données entre tâches communicantes peut être réalisée de différentes manières.

Dans un mode de réalisation, le calculateur 10 peut utiliser un matériel de protection mémoire 6 qui est programmable via des registres accessibles par les processeurs 2. Pour chaque transfert, un ou plusieurs registres du matériel de protection mémoire 6 associé au contrôleur DMA peuvent être renseignés par la tâche initiatrice du transfert par DMA pour décrire les droits mémoires applicable pour le transfert de données entre une zone mémoire source et une zone mémoire de destination. Il convient de noter que, dans un tel mode de réalisation, l'insertion d'un descripteur DMA dans la liste des descripteurs DMA du contrôleur DMA 3 est alors dépendant du nombre de registres du matériel de protection mémoire 6 qui sont disponibles (leur nombre étant limité). Si ce nombre est insuffisant pour décrire les droits mémoires applicables au transfert de donnée, le descripteur DMA est mis en attente. Lorsque le traitement de toutes les requêtes DMA liées à un descripteur DMA est achevé, les registres du matériel de protection mémoire 6 utilisés sont considérés comme libres, c'est-à-dire peuvent être réutilisés pour décrire les droits mémoire pour d'autres transferts de données. Si un ou plusieurs descripteurs DMA sont en attente de traitement, il est vérifié si ceux-ci peuvent être insérés dans la liste des descripteurs DMA en fonction de la libération de registres du matériel de protection mémoire 6.

Dans une autre mode de réalisation, au lieu d'effectuer les changements de droits mémoires lors de l'insertion d'un descripteur DMA (comme le mode de réalisation décrit ci-dessus), les changements de droits mémoire peuvent avoir lieu lorsqu'un accès mémoire invalide est détecté par le mécanisme matériel de protection mémoire 6 pendant l'exécution des requêtes DMA. Dans un tel mode de réalisation, le système d'exploitation 200 vérifie alors si la requête DMA exécutée et initiatrice de l'accès mémoire invalide correspond à un descripteur DMA valide. Si les droits mémoires de ce descripteur DMA ne sont pas déjà renseignés au niveau du mécanisme de protection mémoire 6, des registres du matériel de protection mémoire 6 sont renseignés par le système d'exploitation 200, si un nombre suffisant de ces registres du matériel de protection mémoire 6 sont disponibles. Dans le cas contraire, le descripteur DMA est mis en attente pour un traitement ultérieur lorsque le nombre nécessaire de registres du matériel de protection mémoire 6 est atteint. Si les droits mémoires du descripteur DMA sont déjà renseignés au niveau du mécanisme de protection mémoire 6, l'accès mémoire est alors considéré comme réellement invalide.

Dans un autre mode de réalisation encore, les valeurs devant être appliquées aux registres du matériel de protection mémoire 6 utilisés par le contrôleur DMA 3 peuvent être fournies au matériel de protection mémoire 6, au moyen d'extensions dans le format d'un descripteur DMA. Ainsi, un descripteur DMA comprend, en plus par exemple des adresses mémoire source et destination et de la taille de la zone mémoire à transférer, les droits mémoires associés à ces zones mémoires. Le contrôleur DMA 3 peut alors initier les changements de droits mémoires associés à un descripteur DMA sans nécessiter l'intervention du système d'exploitation 200, contrairement aux solutions classiques portant sur la sécurisation des transferts par DMA. Les processeurs 2 sont ainsi déchargés de la mise en oeuvre de cette sécurisation des transferts par DMA. Les droits mémoires associés aux requêtes DMA peuvent être préalablement calculés par un dispositif indépendant des applicatifs et mis en oeuvre en utilisant un code de confiance, comme par exemple lors de l'édition des liens de l'applicatif par analyse des besoins de l'applicatif par rapport aux différentes zones mémoires du binaire de l'applicatif. Ainsi, l'applicatif n'est pas en mesure de s'approprier des droits mémoires supplémentaires.

La description ci-après de certains modes de réalisation pourra ainsi s'appuyer sur certaines des hypothèses suivantes :
- selon une première hypothèse, il pourra être supposé que le comportement temporel des tâches constituant un applicatif, c'est-à-dire les dates d'activation 23 (encore appelées « release date » en langue anglo-saxonne) et les échéances 25 des différentes instances des tâches, est connu au préalable (connaissance hors-ligne). Généralement, la plupart des systèmes temps réel stricts satisfont une telle hypothèse du fait des contraintes de certification qui s'appliquent dans leurs domaines d'utilisation et qui exigent la fourniture d'une démonstration d'ordonnançabilité des tâches visant à prouver le respect par les tâches temps réel de leurs contraintes temporelles, par exemple par analyse des temps de réponses « pire cas » ;
- Selon une deuxième hypothèse, il pourra être supposé qu'un mécanisme de type DMA est apte à mettre en oeuvre des transferts mémoire interruptibles avec arrêt dans un état cohérent et permettant une reprise ultérieure depuis cet état cohérent, comme cela est le cas pour la plupart des contrôleurs DMA ;
- De manière très optionnelle, selon une troisième hypothèse, il pourra être considéré que le contrôleur DMA 3, par définition pouvant agir comme maître sur l'infrastructure d'interconnexion des composants d'une carte matérielle, est associé à un mécanisme de protection mémoire dédié, disposant d'un nombre limité de descripteurs mémoire potentiellement actif à un instant donné et permettant de décrire les droits mémoires (lecture, écriture, etc.) de zones mémoire. La programmation d'un tel mécanisme de protection mémoire permet de contrôler et d'interdire certains accès mémoires au contrôleur DMA, de manière à éviter la propagation d'erreurs depuis le contrôleur DMA vers la mémoire du système. Toutefois, l'homme du métier comprendra que les modes de réalisation proposés ne dépendent pas de tels mécanismes de protection mémoire qui peuvent être utilisés notamment pour assurer une propriété de non propagation d'erreurs d'une utilisation erronée ou d'un défaut matériel du contrôleur DMA, et par conséquent à assurer la sécurisation des transferts de données mis en oeuvre par un contrôleur DMA ;
- Selon une quatrième hypothèse, il pourra être considéré que la configuration des différents descripteurs mémoires nécessaires pour autoriser les transferts de données entre les tâches d'un applicatif sont calculables avant l'exécution du système. Une telle hypothèse est généralement satisfaite dans les systèmes temps réel stricts du fait des contraintes de certification qui imposent une connaissance statique du comportement des tâches, notamment des échanges de données entre tâches.

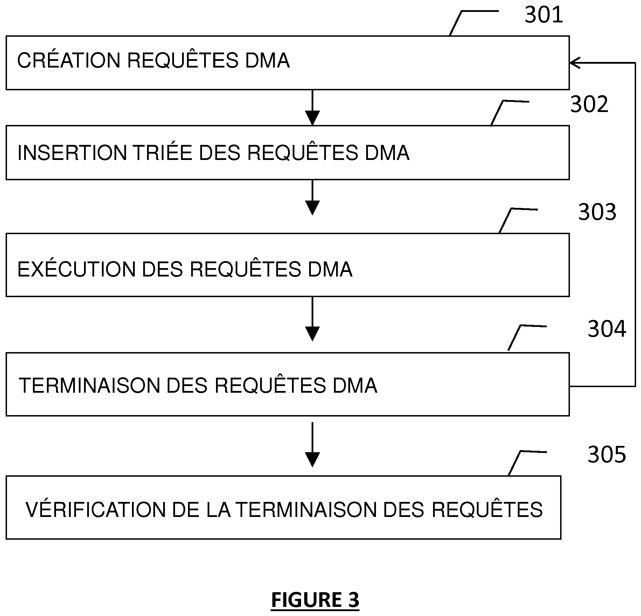

La figure 3 est un organigramme représentant plus en détail le procédé d'exécution de transfert des données (encore appelé ci-après « procédé de transfert des données ») entre tâches temps réel communicantes mis en oeuvre au sein de la mémoire centrale du calculateur 10, selon certaines formes de réalisation.

Le procédé d'exécution des transferts de données DMA s'appuie notamment sur une utilisation du comportement temporel des tâches pour le transfert de données entre tâches temps réel basé sur un contrôleur DMA, ce qui permet d'améliorer les performances du système temps réel dans lequel il est mis en oeuvre ou à l'inverse de diminuer les ressources nécessaires à performance égale.

A l'étape 301, un ou plusieurs descripteurs DMA sont créés par le système d'exploitation 200. Les descripteurs sont utilisés pour spécifier les transferts de données à réaliser par DMA. Ils comprennent notamment les adresses mémoires source et destination ainsi que la taille de la zone mémoire à transférer. Le format général des descripteurs DMA peut dépendre du type de contrôleur 3 utilisé. Par ailleurs, le nombre de descripteurs DMA créés peut dépendre de divers paramètres ou critères, comme par exemple de la capacité du contrôleur DMA 3, de la taille des données, etc.

Le procédé de transfert de données peut être initié par une tâche productrice de données 20 ou en variante par une tâche consommatrice de données 21.

Si la tâche initiatrice est une tâche productrice de données 20, la création de descripteurs DMA à l'étape 301 est réalisée une fois que le code applicatif de l'instance courant k de la tâche productrice 20 est exécuté.

Si la tâche initiatrice est une tâche consommatrice de données 21, la création de descripteurs DMA à l'étape 301 est réalisée une fois que le code applicatif de la précédente instance k-1 de la tâche consommatrice 21 est exécuté.

A l'étape 302, les descripteurs DMA décrivant les transferts de données à réaliser sont insérés par le système d'exploitation 200 dans la liste des requêtes DMA à traiter par le contrôleur DMA 3, transférant ainsi la responsabilité des descripteurs DMA entre le processeur 2 et le contrôleur DMA 3. Si la tâche initiatrice est une tâche productrice 20, l'étape 302 est mise en oeuvre immédiatement après l'étape 301. Si la tâche initiatrice est une tâche consommatrice 21, l'étape 302 est exécutée à la date d'activation l'instance k de la tâche consommatrice 21. Avantageusement, les descripteurs DMA sont insérés de manière triée, en fonction d'un critère de tri relatif à la date de visibilité 24 des données et/ou du comportement temporel des tâches. En particulier, les descripteurs DMA sont insérés de manière triée, en fonction de la date de visibilité 24 des données (i.e. la liste des requêtes DMA est ainsi ordonnée selon un ordre choisi en fonction de la date de visibilité des données) si le procédé est exécuté à l'initiative d'une tâche productrice de données 20. En variante, si le procédé est exécuté à l'initiative d'une tâche consommatrice de données 21, les descripteurs DMA sont insérés de manière triée en fonction de l'échéance de la tâche consommatrice.

Selon les capacités du contrôleur DMA, l'étape 302 peut être mise en oeuvre par des éléments matériels du contrôleur DMA ou par des éléments logiciels ou une combinaison des deux. La requête DMA en cours d'exécution par le contrôleur DMA 3 peut être suspendue temporairement si la mise à jour de la liste des descripteurs DMA détermine qu'un autre descripteur DMA a une priorité supérieure à celle du descripteur couramment traité. La mise en oeuvre d'une telle suspension des requêtes DMA dépend notamment des spécificités du contrôleur DMA utilisé. Dans les modes de réalisation où cette étape est mise en oeuvre au niveau logiciel, le contrôleur DMA peut être suspendu temporairement, c'est-à-dire que la responsabilité des descripteurs DMA est transférée à un processeur 2, lorsque le système d'exploitation 200 débute l'exécution du code de traitement pour mettre à jour la liste des descripteurs DMA. Une telle mise à jour a pour but de permettre l'exécution de ce code sur un état figé des différents descripteurs DMA en attente de traitement par le contrôleur DMA 3.

Il convient de noter que le critère utilisé pour trier les descripteurs DMA peut également être avantageusement utilisé dans un procédé de détection de la violation d'une échéance par une requête DMA issue du traitement des descripteurs DMA. Dans les formes de réalisation où le procédé de transfert est à l'initiative d'une tâche consommatrice 21, l'ordre d'exécution des requêtes DMA est fonction de l'échéance des tâches temps réel consommatrices de données.

Dans les modes de réalisation où un mécanisme de protection mémoire matériel 6 associé au contrôleur DMA 3 est utilisé par le calculateur 10 pour la sécurisation des transferts par DMA et que celui-ci est programmé lors de l'insertion des descripteurs DMA à l'étape 302, le nombre de descripteurs DMA insérés est fonction également du nombre de registres disponibles dans le mécanisme matériel de protection mémoire 6 associé au contrôleur DMA. Les descripteurs non insérés à l'étape 302 peuvent alors être mis en attente de traitement par le contrôleur DMA 3.

Dans le mode de réalisation où les valeurs pour les registres du mécanisme de protection mémoire 6 lui sont fournis au moyen d'extensions dans le format d'un descripteur DMA, le format d'un descripteur DMA est étendu avec la description des droits mémoire sur l'espace des zones mémoires accessibles par le contrôleur DMA pour traiter ce descripteur DMA.

En complément, si le nombre de descripteurs DMA insérés est inférieur au nombre de descripteurs DMA créés à l'étape 301 (la liste des descripteurs DMA du contrôleur DMA étant de taille bornée), les étapes 302, 303 et 304 peuvent être répétées jusqu'à ce que suffisamment d'entrées dans la liste des descripteurs DMA 26 du contrôleur DMA soient libérées pour traiter les descripteurs DMA mis en attente.

A l'étape 303, les descripteurs DMA sont traités par le contrôleur DMA 3 en exécutant des requêtes DMA. Dans le mode de réalisation où un mécanisme de protection mémoire matériel 6 associé au contrôleur DMA 3 est utilisé pour la sécurisation des données, et reçoit les valeurs pour les registres du mécanisme de protection mémoire 6 au moyen d'extensions dans le format d'un descripteur DMA, l'exécution d'une requête DMA à l'étape 303 peut comprendre, de manière optionnelle, un positionnement sur le mécanisme de protection mémoire 6 des droits mémoires décrits dans le descripteur DMA.

En variante, si un mécanisme de protection mémoire matériel 6 est utilisé pour la sécurisation des transferts par DMA de manière à changer les droits mémoires uniquement lorsque le mécanisme de protection mémoire 6 détecte un accès mémoire invalide, l'exécution d'une requête DMA peut ainsi aboutir à une détection d'accès invalide. Dans ce cas, le système d'exploitation 200 vérifie si la requête DMA correspond à un descripteur DMA autorisé et reprogramme des droits mémoires du mécanisme matériel de protection mémoire 6 avec les droits mémoire de ce descripteur DMA, si ces droits ne sont pas déjà renseignés au niveau du mécanisme de protection mémoire 6, pour que la ou les requêtes DMA puissent avoir lieu. Si ceux-ci était déjà renseignés, l'accès mémoire est réellement invalide.

A l'étape 304, le contrôleur DMA 3 positionne un bit de statut dans chaque descripteur DMA pour indiquer qu'un descripteur DMA a été traité à l'étape 303, c'est-à-dire que l'ensemble des requêtes DMA issues de ce descripteur DMA sont exécutées. En complément, il peut notifier au système d'exploitation 200, à l'étape 304, la fin des transferts de données au sein de la mémoire centrale 4. S'il n'est pas prévu de programmer le comportement du contrôleur DMA pour notifier la fin de traitement de chaque descripteur DMA dans une implémentation de ce procédé, les entrées libérées dans la liste des descripteurs DMA du contrôleur DMA ne peuvent pas être utilisées immédiatement pour d'autres transferts de données. Les descripteurs DMA ne peuvent alors être utilisés qu'après l'étape de vérification 305 de leur traitement.

Dans le mode de réalisation où des notifications de fin de traitement des descripteurs DMA sont émises à l'étape 304, une structure de données peut être utilisée par le système d'exploitation 200 pour y stocker une liste des transferts des descripteurs traités.

En particulier, la notification de l'étape 304 peut être déclenchée en fonction d'un nombre prédéterminé de descripteurs DMA traités par le contrôleur DMA et/ou en fonction d'une temporisation à partir du traitement d'un descripteur avant l'envoi de la notification (avec remise à zéro lors de la fin de traitement du descripteur DMA).

A l'étape 305, le système d'exploitation 200 vérifie la terminaison des transferts par DMA de la donnée, avant de déclencher l'exécution de l'instance suivante de la tâche initiatrice (instance suivante k+1 pour une tâche initiatrice de type productrice ou instance courante k pour une tâche initiatrice de type consommatrice).

Pour cela, le système d'exploitation 200 peut vérifier, dans le mode de réalisation où le contrôleur DMA n'est pas programmé pour notifier la fin de traitement des descripteurs DMA :
- pour une tâche initiatrice de type tâche productrice 20, si les descripteurs DMA utilisés pour le transfert de données ayant une date de visibilité 24 inférieure ou égale à la date d'activation de la tâche productrice 20 ont des bits de statuts indiquant la fin de traitement, auquel cas l'exécution de l'instance suivante k+1 peut être initiée, ou
- pour une tâche initiatrice de type tâche consommatrice 21, si l'ensemble des descripteurs DMA créés à l'étape 301, pour une tâche consommatrice 21, ont des bits de statuts indiquant la fin de traitement, auquel cas l'exécution de l'instance courante k peut être initiée.

En variante, dans le mode de réalisation où le contrôleur DMA est programmé pour notifier la fin de traitement des descripteurs DMA, le système d'exploitation 200 peut vérifier :
- pour une tâche initiatrice de type tâche productrice 20, si les descripteurs DMA utilisés pour les transferts de données ayant une date de visibilité 24 inférieure ou égale à la date d'activation de la tâche productrice 20 sont intégralement présents dans la structure de données des descripteurs traités, auquel cas l'exécution de l'instance suivante k+1 peut être initiée, ou
- pour une tâche initiatrice de type tâche consommatrice 21, si l'ensemble des descripteurs DMA créés à l'étape 301, pour une tâche consommatrice 21, sont intégralement présents dans la structure de données des descripteurs traités, auquel cas l'exécution de l'instance courante k peut être initiée.

Selon une autre variante encore du mode de réalisation où le contrôleur DMA est configuré pour surveiller le respect des échéances associées aux descripteurs DMA, l'étape 305 peut :
- soit consister à vérifier, pour une tâche initiatrice de type productrice, qu'aucune violation d'échéance n'a été détectée, si le contrôleur DMA est configuré pour renseigner seulement l'état des requêtes DMA en positionnant des bits de statuts à cet effet, ou
- soit ne pas être mise en oeuvre, si le contrôleur DMA est configuré pour notifier une erreur via une interruption au processeur 2 lorsqu'une violation d'échéance est détectée.

Dans un mode de réalisation particulier, la vérification de l'étape 305 sur une donnée peut être retardée jusqu'au premier instant d'utilisation par le code applicatif de la tâche de la zone mémoire stockant cette donnée, que ce soit pour une tâche productrice 20 ou consommatrice 21. Dans un autre mode de réalisation, l'information selon laquelle des requêtes DMA associées à des descripteurs DMA demandés par une tâche consommatrice ou productrice sont non-terminées (une telle information étant déterminée si la condition de l'étape 305 n'est pas vérifiée pour certains descripteurs DMA) peut être transmise en complément à l'ordonnanceur des tâches du système d'exploitation 200. L'ordonnanceur des tâches peut alors utiliser cette information sur les transferts non terminés comme critère additionnel de décision pour déterminer l'ordre des tâches à exécuter.

Si la condition de l'étape 305 n'est pas vérifiée, une erreur est détectée. Les étapes complémentaires pouvant être exécutées dans ce cas dépendent du domaine de provenance de l'applicatif. De telles étapes complémentaires peuvent comprendre par exemple l'exécution des tâches, malgré l'erreur détectée, avec des valeurs bien définies, l'arrêt de ces tâches, etc.

La date de visibilité 24 de chaque donnée, qui est fonction du modèle d'exécution des tâches temps réel, peut être préalablement fournie et stockée en mémoire pour une utilisation ultérieure lorsqu'un transfert par DMA est mis en oeuvre.

Les modes de réalisation de l'invention offrent donc une solution optimale pour transférer des données entre tâches temps réel sur la base d'un contrôleur DMA. Une telle solution peut en outre être adaptée pour sécuriser les transferts de données entre tâches communicantes de manière à identifier et/ou contenir toute anomalie de fonctionnement d'un contrôleur DMA, lorsque le calculateur 10 comprend au moins un mécanisme de protection mémoire 6 associé au contrôleur DMA 3.

Bien que non limités à de telles applications, le calculateur 10 et le procédé de transfert de données selon les différents modes de réalisation de l'invention sont particulièrement adaptés à une utilisation dans des systèmes temps réel « stricts » où il est nécessaire de fournir la capacité de démontrer le bon fonctionnement du contrôleur mémoire DMA pour la mise en oeuvre des transferts de données.

Le procédé d'exécution permet ainsi de décharger le processeur des copies de la dite donnée par utilisation du contrôleur DMA pour exécuter les tâches temps réel tout en permettant de vérifier le respect ou non de contraintes temporelles applicables à ces échanges et, de manière optionnelle, en sécurisant ces échanges.

Il convient de noter que l'organigramme de la figure 3 est une vue simplifié du procédé d'exécution et que certaines étapes additionnelles peuvent être prévues en fonction du modèle d'exécution des tâches et de communications entre tâches.

Bien que le procédé de la figure 3 est décrit pour le transfert des données entre des tâches temps réel d'un applicatif, il s'applique de manière similaire à tout sous-ensemble de données à transférer entre de telles tâches. L'ensemble de données auquel s'applique le procédé d'exécution peut être préalablement défini par le concepteur d'applicatifs en fonction de divers paramètres tels que par exemple la quantité et la fréquence de production des différentes données, et/ou la capacité des contrôleurs DMA en termes de nombre de transferts possibles.

La description ci-dessus de certains modes de réalisation du procédé d'exécution de transferts de données a été faite en référence à un unique canal de communication d'un contrôleur DMA partagé entre toutes les tâches d'un applicatif donné. Toutefois, l'invention s'applique de manière similaire quelles que soient les capacités, dépendantes des implémentations, de multiplexage de différentes requêtes DMA par un contrôleur DMA via la notion de canaux de communication. En particulier, le procédé d'exécution de transferts de données s'applique de manière similaire en distribuant les transferts de données sur tous les canaux de communication offerts par un contrôleur DMA ou une partie de ces canaux.

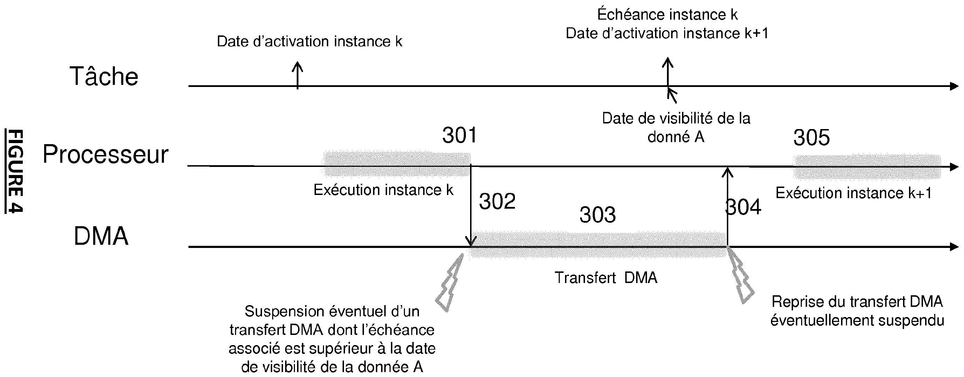

La Figure 4 est un exemple de mise en oeuvre du procédé d'exécution de transfert des données, dans une forme de réalisation où l'instance k d'une tâche temps réel productrice 20 initie le procédé pour transférer une donnée A.

Comme représenté dans l'exemple de la figure 4, la tâche productrice 20 est associée à :
- Une Date d'activation 23 pour l'instance k de la tâche ;
- Une Échéance 25 pour l'instance k de la tâche correspondant à la date d'activation 23 pour l'instance k+1 de la tâche et à la date de visibilité 24 de la donnée A.

Le transfert des données est réalisé selon les étapes suivantes :
- Le système d'exploitation 200 crée un descripteur DMA pour la donnée A une fois que l'instance k est exécutée (301) et l'insère de manière triée en fonction de la date de visibilité 24 de la donnée A dans la liste des descripteurs DMA (302) ;
- Le système d'exploitation 200 peut éventuellement demander à suspendre une requête DMA associé à un descripteur DMA dont l'échéance 25 est supérieure à la date de visibilité 24 de la donnée A;
- Le contrôleur DMA exécute les requêtes DMA (303) d'après la liste des descripteurs DMA mise à jour ;
- Le contrôleur DMA notifie la fin de l'exécution des requêtes DMA (304) au système d'exploitation 200 et la requête DMA éventuellement suspendue peut être reprise ;
- Le système d'exploitation 200 vérifie que les descripteurs DMA ont été traités (305) avant d'initier l'exécution de l'instance k+1 de la tâche.

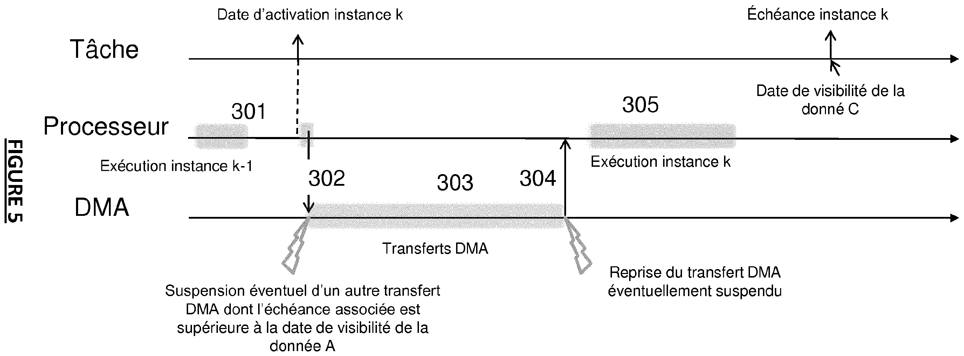

La Figure 5 est un autre exemple de mise en oeuvre du procédé d'exécution de transfert des données, dans une forme de réalisation où l'instance k d'une tâche temps réel consommatrice initie le procédé pour transférer une donnée A.

Comme représenté sur la figure 5, la tâche consommatrice 21 est associée à :
- Une date d'activation 23 pour l'instance k de la tâche qui correspond à la date de visibilité 24 d'une donnée C ;
- Une échéance 25 pour l'instance k de la tâche.

Le transfert des données est réalisé selon les étapes suivantes :
- Le système d'exploitation 200 crée un descripteur DMA pour la donnée C une fois que l'instance k-1 de la tâche consommatrice est exécutée (301) et l'insère de manière triée, en fonction de l'échéance 25 de l'instance k de la tâche consommatrice, dans la liste triée des descripteurs DMA (302) à l'activation de l'instance k;
- Le système d'exploitation 200 peut suspendre éventuellement un autre transfert DMA dont l'échéance associée est supérieure à l'échéance de l'instance k de la tâche consommatrice de la donnée C ;
- Le contrôleur DMA exécute les requêtes DMA (303) d'après la liste des descripteurs DMA mise à jour ;
- Le contrôleur DMA notifie la fin de l'exécution des requêtes DMA (304) au système d'exploitation 200 et la requête DMA éventuellement suspendue peut être reprise ;
- Le système d'exploitation 200 vérifie que les descripteurs DMA ont été traités (305) avant d'initier l'exécution de l'instance courante k de la tâche consommatrice.

Ainsi, dans les formes de réalisation où le transfert est initié par une tâche consommatrice 21, le transfert par DMA a lieu entre l'activation et l'exécution de l'instance k alors que dans les formes de réalisation où le transfert est initié par une tâche productrice 20, le transfert par DMA a lieu entre l'échéance de l'instance k et l'exécution de l'instance k+1.

Les modes de réalisation de l'invention permettent ainsi l'ordonnancement et l'optimisation des transferts de données entre tâches temps réel communicantes, en s'appuyant sur un contrôleur DMA, à partir du modèle de comportement temporel des tâches, tout en assurant le respect des échéances associées au système et au besoin en sécurisant leur transfert. Les différents processeurs 2 peuvent donc être déchargés de la gestion explicite des transferts mémoires. Le temps processeur supplémentaire qui est ainsi dégagé peut être consacré à l'exécution de divers traitements applicatifs. L'utilisation des ressources d'exécution est par conséquent optimisée pour la conception de système temps réel stricts.

L'homme du métier comprendra que le procédé d'exécution de transfert de données peut être mis en oeuvre de diverses manières par matériel (« hardware »), logiciel, ou une combinaison de matériel et de logiciels.

L'invention n'est pas limitée aux modes de réalisation décrits ci-avant à titre d'exemple non limitatif. Elle englobe toutes les variantes de réalisation qui pourront être envisagées par l'homme du métier. En particulier, l'invention n'est pas limitée à un type particulier de processeur ou de contrôleur DMA, ni à des capacités particulières de multiplexage de différentes requêtes DMA par un contrôleur DMA via des canaux de communication.

## Revendications

1. Procédé pour transférer au moins une donnée entre une tâche temps réel productrice d'une donnée (20) et une tâche temps réel consommatrice (21) de la dite donnée, chaque donnée étant associée à une date de visibilité, ledit procédé étant mis en oeuvre dans un calculateur (10) comprenant une mémoire centrale (4), au moins un processeur (2) et au moins d'un contrôleur d'accès direct à la mémoire DMA (3), chaque contrôleur DMA (3) étant configuré pour prendre en charge les transferts de données entre différentes zones de la mémoire centrale (4) sous le contrôle d'un système d'exploitation (200) exécuté sur lesdits processeurs (2), **caractérisé en ce qu'**il comprend les étapes suivantes, en réponse à l'initiation du transfert d'une donnée par l'instance courante (k) d'une tâche initiatrice (20, 21):
- la création (301) par le système d'exploitation (200) d'au moins un descripteur DMA pour décrire le transfert par DMA attendu pour ladite donnée, après l'exécution d'une instance donnée (k-1, k) de la tâche ;
- l'insertion (302) par ledit système d'exploitation (200) des descripteurs DMA dans une liste de descripteurs (26) en attente de traitement par ledit contrôleur DMA (3), lesdits descripteurs DMA étant insérés de manière triée en fonction d'un critère de tri relatif à la date de visibilité des données et/ou du comportement temporel des tâches;
- Le traitement des descripteurs de ladite liste de descripteurs DMA (26) par exécution de requêtes DMA (303) par le contrôleur DMA (3); et
- l'exécution de l'instance suivante (k, k+1) de la tâche initiatrice par le système d'exploitation (200) en fonction de la terminaison du traitement d'un ensemble prédéfini des descripteurs DMA de ladite liste de descripteurs.

2. Procédé selon la revendication 1, **caractérisé en ce qu'**il comprend une étape de vérification (305) par le système d'exploitation (200) de la terminaison du traitement dudit ensemble prédéfini des descripteurs DMA de ladite liste.

3. Procédé selon l'une des revendications précédentes, **caractérisé en ce que** la tâche initiatrice est une tâche productrice de données (20), **en ce que** l'étape de création des descripteurs DMA (301) est déclenchée en réponse à la terminaison de l'exécution de l'instance courante (k) de la tâche initiatrice (20).

4. Procédé selon la revendication 3, **caractérisé en ce que** ledit critère de tri est la date de visibilité (24) associée à la donnée à transférer.

5. Procédé selon l'une des revendications 2 à 4, **caractérisé en ce que** ledit ensemble de descripteurs comprend les descripteurs DMA qui ont une date de visibilité (24) inférieure ou égale à la date d'activation de la prochaine l'instance de la tâche initiatrice (20), et **en ce que** l'étape de vérification (305) est mise en oeuvre en déterminant si les descripteurs dudit ensemble sont associés à des informations de fin de traitement.

6. Procédé selon l'une des revendications 1 et 2, **caractérisé en ce que** la tâche initiatrice est une tâche consommatrice de données (20), **en ce que** l'étape de création des descripteurs DMA (301) est déclenchée en réponse à la terminaison de l'exécution de l'instance précédente (k-1) de la tâche initiatrice (21).

7. Procédé selon la revendication 6, **caractérisé en ce que** le critère de tri est la date d'échéance (25) de l'instance courante (k) de la tâche initiatrice (21).

8. Procédé selon l'une des revendications 6 et 7, **caractérisé en ce que** ledit ensemble de descripteurs comprend l'ensemble des descripteurs DMA créés à l'étape de création (301), et **en ce que** l'étape de vérification (305) est mise en oeuvre en déterminant si les descripteurs dudit ensemble sont associés à des informations de fin de traitement.

9. Procédé selon l'une des revendications précédentes, **caractérisé en ce que** ladite étape d'insertion (302) comprend en outre la suspension temporaire des requêtes DMA en cours d'exécution par le contrôleur DMA (3), ledit temps de suspension étant utilisé par le système d'exploitation (200) pour mettre à jour la liste des descripteurs DMA.

10. Procédé l'une des revendications 2 à 9, **caractérisé en ce qu'**il comprend en outre une étape de terminaison (304) dans laquelle les bits de statut des descripteurs DMA traités à l'étape d'exécution (303) par le contrôleur DMA (3) sont positionnés pour indiquer la fin de traitement des descripteurs DMA.

11. Procédé selon l'une des revendications 1 à 9, **caractérisé en ce qu'**il comprend en outre une étape (304) de notification dans laquelle le contrôleur DMA (3) notifie au système d'exploitation (200) la fin des transferts de données au sein de la mémoire centrale (4) et **en ce que** le système d'exploitation (200) est apte à stocker des informations de fin de transferts dans une structure de données sous la forme d'une liste des transferts de données terminés.

12. Procédé selon l'une des revendications précédentes 2 à 11, **caractérisé en ce que** l'étape de vérification (305) sur une donnée est retardée jusqu'au premier instant d'utilisation par la tâche de la zone mémoire stockant la donnée.

13. Procédé selon l'une des revendications précédentes, **caractérisé en ce que** le calculateur (10) comprend au moins un mécanisme matériel de protection mémoire (6) associé au contrôleur DMA pour sécuriser les transferts de données par programmation via des registres matériels accessibles par ledit processeur (2), ledit procédé comprenant :
- à l'étape d'insertion des descripteurs DMA (302), la programmation des registres matériels avec les droits mémoire nécessaires pour réaliser le transfert de ladite donnée ; ou
- lors de la détection d'un accès invalide par le mécanisme matériel de protection mémoire (6), la vérification que l'accès mémoire correspondant appartient à un des descripteurs DMA créés à l'étape de création (301) pour le transfert de la dite donnée et la programmation des registres du matériel de protection mémoire avec les droits mémoire nécessaires pour réaliser le transfert de ladite donnée.

14. Procédé selon l'une des revendications 1 à 12, **caractérisé en ce que** le calculateur (10) comprend au moins un mécanisme matériel de protection mémoire (6) associé au contrôleur DMA pour sécuriser les transferts d'une donnée et utilisant des descripteurs mémoires qui lui sont fournis au moyen d'extensions dans le format d'un descripteur DMA pour inclure la description des droits mémoire autorisés pour les requêtes DMA associées au descripteur DMA, lesdits droits mémoires étant utilisés à l'étape d'exécution (303) par le contrôleur DMA pour programmer le mécanisme matériel de protection mémoire (6) avec les droits mémoires nécessaires de manière à réaliser le transfert de ladite donnée.

15. Calculateur (10) comprenant une mémoire centrale (4), au moins un processeur (2) et au moins d'un contrôleur d'accès direct à la mémoire DMA (3), chaque contrôleur DMA (3) étant configuré pour prendre en charge les transferts de données entre différentes zones de la mémoire centrale (4) sous le contrôle d'un système d'exploitation (200) exécuté sur lesdits processeurs (2), le calculateur étant configuré pour transférer au moins une donnée entre une tâche temps réel productrice d'une donnée (20) et une tâche temps réel consommatrice (21) de la dite donnée, chaque donnée étant associée à une date de visibilité, **caractérisé en ce que**, en réponse à l'initiation du transfert d'une donnée par l'instance courante (k) d'une tâche initiatrice (20, 21):
- le système d'exploitation (200) est apte à créer au moins un descripteur DMA pour décrire le transfert par DMA attendu pour ladite donnée, après l'exécution d'une instance donnée de la tâche (k-1, k) et pour insérer (302) des descripteurs DMA dans une liste de descripteurs (26) en attente de traitement par ledit contrôleur DMA (3), lesdits descripteurs DMA étant insérés de manière triée en fonction d'un critère de tri relatif à la date de visibilité des données et/ou du comportement temporel des tâches;
- Le contrôleur DMA (3) est configuré pour traiter les descripteurs de ladite liste de descripteurs DMA (26) par exécution de requêtes DMA (303);
et **en ce que** le système d'exploitation (200) est en outre configuré pour exécuter de l'instance suivante (k, k+1) de la tâche initiatrice en fonction de la terminaison du traitement d'un ensemble prédéfini des descripteurs DMA de ladite liste de descripteurs.

## Patentansprüche

1. Verfahren zum Übertragen mindestens eines Datenelements zwischen einem Echtzeit-Task (20) zum Erzeugen eines Datenelements und einem Echtzeit-Task (21) zum Verbrauchen des genannten Datenelements, wobei jedes Datenelement mit einem Sichtbarkeitsdatum verknüpft ist, wobei das Verfahren in einem Rechner (10) ausgeführt wird, der einen Hauptspeicher (4), mindestens einen Prozessor (2) und mindestens einen Direktzugriffs-Controller für den Arbeitsspeicher DMA (3) umfasst, wobei jeder DMA-Controller (3) konfiguriert ist, um die Datenübertragungen zwischen unterschiedlichen Bereichen des Hauptspeichers (4) unter der Kontrolle eines Betriebssystems (200) zu handhaben, das auf den Prozessoren (2) ausgeführt wird, **dadurch gekennzeichnet, dass** es als Reaktion auf die Einleitung der Übertragung eines Datenelements durch die aktuelle Instanz (k) eines Auslösungs-Tasks (20, 21) die folgenden Schritte umfasst:
- die Erzeugung (301) mindestens eines DMA-Deskriptors durch das Betriebssystem (200), um nach der Ausführung einer gegebenen Instanz (k-1, k) des Tasks die für das Datenelement erwartete Übertragung durch DMA zu beschreiben;
- das Einfügen (302), durch das Betriebssystem (200), von DMA-Deskriptoren in eine Deskriptorenliste (26) in Erwartung der Behandlung durch den DMA-Controller (3), wobei die DMA-Deskriptoren als Funktion eines Sortierkriteriums relativ zu dem Sichtbarkeitsdatum der Daten und/oder des zeitlichen Verhaltens der Tasks in einer sortierten Weise eingefügt werden;
- die Behandlung der Deskriptoren der DMA-Deskriptorenliste (26) durch Ausführung der DMA-Anfragen (303) durch den DMA-Controller (3); und
- die Ausführung, durch das Betriebssystem (200), der folgenden Instanz (k, k+1) des Auslösungs-Tasks als Funktion der Beendigung der Behandlung einer vordefinierten Gesamtheit der DMA-Deskriptoren der Deskriptorenliste.

2. Verfahren nach Anspruch 1, **dadurch gekennzeichnet, dass** es einen Überprüfungsschritt (305), durch das Betriebssystem (200), der Beendigung der Behandlung der vordefinierten Gesamtheit der DMA-Deskriptoren der Liste umfasst.

3. Verfahren nach einem der vorhergehenden Ansprüche, **dadurch gekennzeichnet, dass** der Auslösungs-Task ein Erzeuger-Task von Daten (20) ist, dass der Schritt der Erzeugung der DMA-Deskriptoren (301) als Reaktion auf die Beendigung der Ausführung der aktuellen Instanz (k) des Auslösungs-Tasks (20) ausgelöst wird.

4. Verfahren nach Anspruch 3, **dadurch gekennzeichnet, dass** das Sortierkriterium das mit dem zu übertragenden Datenelement verknüpfte Sichtbarkeitsdatum (24) ist.

5. Verfahren nach einem der Ansprüche 2 bis 4, **dadurch gekennzeichnet, dass** die Gesamtheit der Deskriptoren die DMA-Deskriptoren umfasst, die ein Sichtbarkeitsdatum (24) kleiner als oder gleich dem Aktivierungsdatum der nächsten Instanz des Auslösungs-Tasks (20) haben, und dass der Überprüfungsschritt (305) durch Bestimmen ausgeführt wird, ob die Deskriptoren der Gesamtheit mit den Informationen des Behandlungsendes verknüpft sind.

6. Verfahren nach einem der Ansprüche 1 und 2, **dadurch gekennzeichnet, dass** der Auslösungs-Task ein Verbraucher-Task von Daten (20) ist, dass der Schritt der Erzeugung der DMA-Deskriptoren (301) als Reaktion auf die Beendigung der Ausführung der vorhergehenden Instanz (k-1) des Auslösungs-Task (21) ausgelöst wird.

7. Verfahren nach Anspruch 6, **dadurch gekennzeichnet, dass** das Sortierkriterium das Fälligkeitsdatum (25) der aktuellen Instanz (k) des Auslösungs-Task (21) ist.

8. Verfahren nach einem der Ansprüche 6 und 7, **dadurch gekennzeichnet, dass** die Gesamtheit der Deskriptoren die Gesamtheit der bei dem Schritt der Erzeugung (301) erzeugten DMA-Deskriptoren umfasst, und dass der Überprüfungsschritt (305) durch ein Bestimmen ausgeführt wird, ob die Deskriptoren der Gesamtheit mit Informationen des Behandlungsendes verknüpft sind.

9. Verfahren nach einem der vorhergehenden Ansprüche, **dadurch gekennzeichnet, dass** der Einfügungsschritt (302) außerdem das vorübergehende Aussetzen der DMA-Anfragen im Laufe der Ausführung durch den DMA-Controller (3) umfasst, wobei die Aussetzungszeit durch das Betriebssystem (200) benutzt wird, um die Liste der DMA-Deskriptoren zu aktualisieren.

10. Verfahren nach einem der Ansprüche 2 bis 9, **dadurch gekennzeichnet, dass** es außerdem einen Beendigungsschritt (304) umfasst, in dem die durch den DMA-Controller (3) bei dem Ausführungsschritt (303) behandelten Statusbits der DMA-Deskriptoren angeordnet werden, um das Behandlungsende der DMA-Deskriptoren anzuzeigen.

11. Verfahren nach einem der Ansprüche 1 bis 9, **dadurch gekennzeichnet, dass** es außerdem einen Benachrichtigungsschritt (304) umfasst, in dem der DMA-Controller (3) das Betriebssystem (200) über das Datenübertragungsende innerhalb des Hauptspeichers (4) benachrichtigt und dass das Betriebssystem (200) geeignet ist, Informationen des Datenübertragungsendes in der Form einer Liste der beendeten Datenübertragungen zu speichern.

12. Verfahren nach einem der vorhergehenden Ansprüche 2 bis 11, **dadurch gekennzeichnet, dass** der Überprüfungsschritt (305) eines Datenelements bis zum ersten Benutzungszeitpunkt durch den Task des Arbeitsspeicherbereichs verzögert wird, der das Datenelement speichert.

13. Verfahren nach einem der vorhergehenden Ansprüche, **dadurch gekennzeichnet, dass** der Rechner (10) mindestens einen mit dem DMA-Controller verknüpften Hardwaremechanismus für Speicherschutz (6) umfasst, um die Datenübertragungen durch Programmierung mittels der durch den Prozessor (2) zugänglichen Hardwareregister zu sichern, wobei das Verfahren umfasst:
- beim Schritt des Einfügens der DMA-Deskriptoren (302) die Programmierung der Hardwareregister mit den notwendigen Speicherberechtigungen, um die Übertragung des Datenelements durchzuführen; oder
- anlässlich der Erfassung eines ungültigen Zugriffs durch den Hardwaremechanismus für Speicherschutz (6) die Überprüfung, dass der entsprechende Speicherzugriff zu einem der DMA-Deskriptoren gehört, der bei dem Erzeugungsschritt (301) für die Übertragung des Datenelements und der Programmierung der Hardwareregister für Speicherschutz mit den notwendigen Speicherberechtigungen erzeugt wurde, um die Übertragung des Datenelements durchzuführen.

14. Verfahren nach einem der Ansprüche 1 bis 12, **dadurch gekennzeichnet, dass** der Rechner (10) mindestens einen Hardwaremechanismus für Speicherschutz (6) umfasst, der mit dem DMA-Controller verknüpft ist, um die Übertragungen eines Datenelements zu sichern, und Arbeitsspeicher-Deskriptoren verwendet, die ihm mittels Erweiterungen in dem Format eines DMA-Deskriptors geliefert werden, um die mit dem DMA-Deskriptor verbundene, für die DMA-Anfragen erlaubte Beschreibung der Speicherberechtigungen einzuschließen, wobei die Speicherberechtigungen beim Schritt der Ausführung (303) durch den DMA-Controller verwendet werden, um den Hardwaremechanismus für Speicherschutz (6) mit den notwendigen Speicherberechtigungen in einer Weise zu programmieren, um die Übertragung des Datenelements durchzuführen.

15. Rechner (10), der einen Hauptspeicher (4), mindestens einen Prozessor (2) und mindestens einen Direktzugriffs-Controller für den Arbeitsspeicher DMA (3) umfasst, wobei jeder DMA-Controller (3) konfiguriert ist, um die Datenübertragungen zwischen unterschiedlichen Bereichen des Hauptspeichers (4) unter der Kontrolle eines auf den Prozessoren (2) ausgeführten Betriebssystems (200) zu handhaben, wobei der Rechner zum Übertragen mindestens eines Datenelements zwischen einem Echtzeit-Task zum Erzeugen eines Datenelements (20) und einem Echtzeit-Task (21) zum Verbrauchen des genannten Datenelements konfiguriert ist, wobei jedes Datenelement mit einem Sichtbarkeitsdatum verknüpft ist, **dadurch gekennzeichnet, dass** als Reaktion auf die Einleitung der Übertragung eines Datenelements durch die aktuelle Instanz (k) eines Auslösungs-Tasks (20, 21):
- das Betriebssystem (200) geeignet ist, mindestens einen DMA-Deskriptor zu erzeugen, um die erwartete DMA-Übertragung für das Datenelement nach der Ausführung einer gegebenen Instanz des Tasks (k-1, k) zu beschreiben, und um DMA-Deskriptoren in eine Deskriptorenliste (26) in Bereitschaft einer Behandlung durch den DMA-Controller (3) einzufügen (302), wobei die DMA-Deskriptoren als Funktion eines Sortierkriteriums relativ zu dem Sichtbarkeitsdatum der Daten und/oder des zeitlichen Verhaltens der Tasks in einer sortierten Weise eingefügt werden;
- der DMA-Controller (3) konfiguriert ist, um die Deskriptoren der DMA-Deskriptorenliste (26) durch Ausführung von DMA-Anfragen (303) zu verarbeiten;
und dass das Betriebssystem (200) außerdem konfiguriert ist, um die folgende Instanz (k, k+1) des Auslösungs-Tasks als Funktion der Beendigung der Behandlung einer vordefinierten Gesamtheit der DMA-Deskriptoren der Deskriptorenliste auszuführen.

## Claims

1. A method for transferring at least one datum between a real-time task (20) producing a datum and a real-time task (21) consuming said datum, each datum being associated with a visibility date, said method being implemented in a computer (10) comprising a central memory (4), at least one processor (2) and at least one direct memory access DMA controller (3), each DMA controller (3) being configured to handle the data transfers between various zones of the central memory (4) controlled by an operating system (200) executed on said processors (2), **characterised in that** it comprises the following steps, in response to the initiation of the transfer of a datum by the current instance (k) of an initiating task (20, 21):
- creating (301), by the operating system (200), at least one DMA descriptor for describing the DMA transfer expected for said datum, following the execution of a given instance (k-1, k) of the task;
- inserting (302), by the operating system (200), DMA descriptors in a list of descriptors (26) awaiting processing by said DMA controller (3), said DMA descriptors being inserted in a sorted manner as a function of a sorting criterion relating to the visibility date of the data and/or the temporal behaviour of the tasks;
- processing descriptors of said list of DMA descriptors (26) by executing DMA requests (303) by the DMA controller (3); and
- executing, by the operating system (200), the following instance (k, k+1) of the initiating task as a function of the completion of the processing of a predefined set of the DMA descriptors of said list of descriptors.

2. The method according to claim 1, **characterised in that** it comprises a step (305) of verifying, by the operating system (200), the completion of the processing of said predefined set of the DMA descriptors of said list.

3. The method according to any one of the preceding claims, **characterised in that** the initiating task is a data producing task (20), **in that** the step (301) of creating DMA descriptors is triggered in response to the completion of the execution of the current instance (k) of the initiating task (20).

4. The method according to claim 3, **characterised in that** said sorting criterion is the visibility date (24) associated with the datum to be transferred.

5. The method according to any one of claims 2 to 4, **characterised in that** said set of descriptors comprises the DMA descriptors that have a visibility date (24) that is less than or equal to the activation date of the next instance of the initiating task (20), and **in that** the verification step (305) is implemented by determining whether the descriptors of said set are associated with end of processing information.

6. The method according to any one of claims 1 and 2, **characterised in that** the initiating task is a data consuming task (20), and **in that** the step (301) of creating DMA descriptors is triggered in response to the completion of the execution of the preceding instance (k-1) of the initiating task (21).

7. The method according to claim 6, **characterised in that** the sorting criterion is the expiry date (25) of the current instance (k) of the initiating task (21).

8. The method according to any one of claims 6 and 7, **characterised in that** said set of descriptors comprises the set of DMA descriptors created during the creation step (301), and **in that** the verification step (305) is implemented by determining whether the descriptors of said set are associated with end of processing information.

9. The method according to any one of the preceding claims, **characterised in that** said insertion step (302) further comprises the temporary suspension of DMA requests being executed by the DMA controller (3), said suspension time being used by the operating system (200) to update the list of DMA descriptors.

10. The method according to any one of claims 2 to 9, **characterised in that** it further comprises a completion step (304), in which the status bits of the DMA descriptors processed during the execution step (303) by the DMA controller (3) are set to indicate the end of processing of the DMA descriptors.

11. The method according to any one of claims 1 to 9, **characterised in that** it further comprises a notification step (304), in which the DMA controller (3) notifies the operating system (200) of the end of data transfers within the central memory (4), and **in that** the operating system (200) is capable of storing end of transfer information in a data structure in the form of a list of completed data transfers.

12. The method according to any one of claims 2 to 11, **characterised in that** the verification step (305) on a datum is delayed until the first instant of use by the task of the memory zone storing the datum.

13. The method according to any one of the preceding claims, **characterised in that** the computer (10) comprises at least one hardware memory protection mechanism (6) associated with the DMA controller to safeguard data transfers by programming via hardware registers that can be accessed by said processor (2), said method comprising:
- programming, in the step (302) of inserting DMA descriptors, hardware registers with the memory rights that are required to transfer said datum; or
- verifying, upon detection of an invalid access by the hardware memory protection mechanism (6), that the corresponding memory access belongs to one of the DMA descriptors created in the creation step (301) for transferring said datum and for programming registers of the hardware memory protection with the memory rights required to complete the transfer of said datum.

14. The method according to any one of claims 1 to 12, **characterised in that** the computer (10) comprises at least one hardware memory protection mechanism (6) associated with the DMA controller to safeguard transfers of a datum and using memory descriptors that it receives by means of extensions in the format of a DMA descriptor to include the description of the authorised memory rights for the DMA requests associated with the DMA descriptor, said memory rights being used during the execution step (303) by the DMA controller to programme the hardware memory protection mechanism (6) with the required memory rights so as to complete the transfer of said datum.

15. A computer (10) comprising a central memory (4), at least one processor (2) and at least one direct memory access DMA controller (3), each DMA controller (3) being configured to handle the data transfers between various zones of the central memory (4) controlled by an operating system (200) executed on said processors (2), the computer being configured to transfer at least one datum between a real-time task (20) producing a datum and a real-time task (21) consuming said datum, each datum being associated with a visibility date, **characterised in that**, in response to the initiation of the transfer of a datum by the current instance (k) of an initiating task (20, 21):
- the operating system (200) is capable of creating at least one DMA descriptor for describing the DMA transfer expected for said datum, following the execution of a given instance (k-1, k) of the task and for inserting (302) DMA descriptors in a list of descriptors (26) awaiting processing by said DMA controller (3), said DMA descriptors being inserted in a sorted manner as a function of a sorting criterion relating to the visibility date of the data and/or the temporal behaviour of the tasks;
- the DMA controller (3) is configured to process the descriptors of said list of DMA descriptors (26) by executing DMA requests (303);
and **in that** the operating system (200) is further configured to execute the following instance (k, k+1) of the initiating task as a function of the completion of the processing of a predefined set of the DMA descriptors of said list of descriptors.
